(19) Europäisches Patentamt
European Patent Office
Office européen des brevets

(11) **EP 4 618 642 A1**

(12) **EUROPEAN PATENT APPLICATION**
published in accordance with Art. 153(4) EPC

(43) Date of publication:
**17.09.2025 Bulletin 2025/38**

(21) Application number: **23909834.6**

(22) Date of filing: **24.11.2023**

(51) International Patent Classification (IPC):
***H04W 56/00*** (2009.01)

(52) Cooperative Patent Classification (CPC):
**H04W 56/00**

(86) International application number:
**PCT/CN2023/133845**

(87) International publication number:
**WO 2024/139902 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 CN 202211716284**

(71) Applicant: **Huawei Technologies Co., Ltd.
Shenzhen, Guangdong 518129 (CN)**

(72) Inventors:
• **SHU, Hui
Shenzhen, Guangdong 518129 (CN)**
• **LIU, Yahui
Shenzhen, Guangdong 518129 (CN)**
• **QUE, Chengsheng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **FREQUENCY SYNCHRONIZATION METHOD AND RELATED APPARATUS**

(57) A frequency synchronization method and a related apparatus are provided, to meet a requirement for coexistence of a high frequency band and a low frequency band without additional costs. The method in embodiments of this application includes: A second device sends a first signal corresponding to a low frequency band to a first device; and the first device obtains a first frequency offset corresponding to a high frequency band based on the first signal, where the first frequency offset is used for frequency synchronization in the high frequency band. After completing frequency synchronization in a high frequency band, the first device may communicate with the second device in the high frequency band.

FIG. 5

**Description**

This application claims priority to Chinese Patent Application No. 202211716284.5, filed with the China National Intellectual Property Administration on December 29, 2022 and entitled "FREQUENCY SYNCHRONIZATION METHOD AND RELATED APPARATUS", which is incorporated herein by reference in its entirety.

**TECHNICAL FIELD**

This application relates to the field of signal transmission, and in particular, to a frequency synchronization method and a related apparatus.

**BACKGROUND**

A wireless communication network usually includes two frequency ranges: a low frequency band and a high frequency band. Physical layer protocols that are specified in a related standard and that are of the high frequency band and the low frequency band differ greatly. Commercialization and an ecosystem of the high frequency band (a millimeter-wave frequency band) are yet to be fully developed, and the low frequency band has better commercial use due to a wavelength advantage. Therefore, if a physical layer frame format supported by the low frequency band can be used in the high frequency band, an original chip resource of the low frequency band can be basically reused to support high-frequency-band communication, so that chip investment is reduced, a development cycle is shortened, and a market is quickly preempted.

Because center frequencies of the high frequency band and the low frequency band differ greatly, in a scenario in which the high frequency band and the low frequency band coexist, to meet a frequency offset requirement, during a chip design, it may be considered to select two types of crystal oscillators with different specifications or select a uniform crystal oscillator with a higher requirement. However, this method causes a chip cost increase. Therefore, how to design a frequency synchronization solution to meet a requirement for coexistence of the high frequency band and the low frequency band by using a low-cost method is a technical problem to be urgently resolved by persons skilled in the art.

**SUMMARY**

Embodiments of this application provide a frequency synchronization method and a related apparatus, to meet a requirement for coexistence of a high frequency band and a low frequency band without additional costs.

According to a first aspect, this application provides a frequency synchronization method. The method may be applied to various wireless communication systems, such as a wireless routing system, a long term evolution system, and a 5G communication system. The method may be performed by a communication chip in the wireless communication system or a communication apparatus integrated with the communication chip. The communication apparatus may be a terminal device that provides a service for a user. The method includes:

> receiving a first signal corresponding to a low frequency band, where due to small signal attenuation and large received signal strength of the low frequency band, when frequency synchronization is performed based on a low-frequency-band signal, the first signal corresponding to the low frequency band needs to be first received; and the signal corresponding to the low frequency band refers to a signal from the low frequency band; and
> obtaining a first frequency offset corresponding to a high frequency band based on the first signal, where the first frequency offset is used for frequency synchronization in the high frequency band; the first frequency offset corresponding to the high frequency band refers to a frequency offset that meets a high-frequency-band communication requirement; and to implement high-frequency-band communication with a signal sending end, a center frequency of the signal sending end may be obtained based on the first signal, to calculate a frequency difference between the signal sending end and a signal receiving end, so as to adjust a center frequency of the signal receiving end, so that the center frequency of the signal receiving end meets the high-frequency-band communication requirement of the signal sending end.

In this embodiment, based on features of small signal attenuation, large received signal strength, and more accurate frequency offset calculation of the low frequency band, frequency synchronization can be easily completed by receiving a downlink low-frequency-band signal. In this method, a low-cost low-frequency-band crystal oscillator is adjusted to meet a requirement for subsequent communication in the high frequency band. This method may be directly improved and applied on an existing low-frequency-band crystal oscillator, and can achieve a frequency synchronization effect without additional costs. This resolves a problem of cost increase caused by chip improvement or replacement in a current related technology, and implements effect of meeting a requirement for coexistence of the high frequency band and the low frequency band by using a simple low-cost method.

In a possible implementation method, after obtaining the first frequency offset corresponding to the high frequency band based on the first signal, the method further includes:

sending a second signal corresponding to the high frequency band.

In this embodiment, after frequency synchronization corresponding to high-frequency-band communication is performed, the second signal corresponding to the high frequency band may be sent.

In a possible implementation method, sending the second signal corresponding to the high frequency band specifically includes:

sending a third signal, where the third signal is used to determine whether frequency synchronization is performed in the high frequency band; and
after receiving a fourth signal corresponding to the high frequency band, sending the second signal corresponding to the high frequency band.

In this embodiment, after frequency synchronization is performed based on the first frequency offset, a theoretical high-frequency-band communication requirement is met, but in actual signal transmission, the high-frequency-band communication requirement may not be met. Therefore, the third signal may be directly sent. The third signal is used by the signal sending end to determine whether the high-frequency-band communication requirement is met. If the high-frequency-band communication requirement is met, the fourth signal corresponding to the high frequency band is directly sent. After the fourth signal is received, it indicates that high-frequency-band communication can be performed. In this case, the second signal corresponding to the high frequency band is sent.

In a possible implementation method, the first frequency offset is specifically used for voltage or capacitance adjustment of a crystal oscillator.

In this embodiment, a voltage or a capacitance of the crystal oscillator may be directly adjusted based on the first frequency offset, or a configuration parameter of the crystal oscillator may be generated based on the first frequency offset, where the configuration parameter is used to adjust the crystal oscillator.

In a possible implementation method, obtaining the first frequency offset corresponding to the high frequency band based on the first signal specifically includes:

obtaining a time-domain signal that is in the first signal and that repeats at least two signal periods, where the at least two signal periods include a first signal period and a second signal period; and
calculating the first frequency offset corresponding to the high frequency band based on an autocorrelation function of the time-domain signal.

The autocorrelation function meets a first formula:

$$\mathrm{selfcorr} = \int_0^{\mathrm{T}} \mathrm{s}^*(\mathrm{t} + \mathrm{t}_1) \cdot \mathrm{s}(\mathrm{t} + \mathrm{t}_2)$$

Herein, selfcorr is the autocorrelation function, t is a time variable of the time-domain signal, $t_1$ is an initial time of the first signal period, $t_2$ is an initial time of the second signal period, T is duration of the signal period, s(t) represents a time-domain signal function that changes with the time variable t, and s*(t) is a conjugate function of s(t).

The first frequency offset meets a second formula:

$$\Delta f = \arctan(\mathrm{imag(selfcorr)}/\mathrm{real(selfcorr)})/(2 \cdot \pi \cdot (\mathrm{t}_2 - \mathrm{t}_1)/1000)$$

The first frequency offset meets a first constraint:

$$-\pi \le 2 \cdot \pi \cdot \Delta f \cdot (\mathrm{t}_2 - \mathrm{t}_1)/1000 \le \pi$$

Herein, $\Delta f$ is the first frequency offset, *imag(selfcorr)* is an imaginary part of the autocorrelation function, and *real(selfcorr)* is a real part of the autocorrelation function.

In this embodiment, the time-domain signal in the first signal is obtained, and then the first frequency offset is calculated based on the autocorrelation function of the time-domain signal.

According to a second aspect, this application provides a frequency synchronization method. The method may be performed by a communication chip in a wireless communication system or a communication apparatus integrated with the communication chip. The communication apparatus may be a network device that is deployed in a radio access network and that provides a wireless communication function for a terminal device. The method includes:
sending a first signal corresponding to a low frequency band, where the first signal is used to determine a first frequency offset corresponding to a high frequency band.

In a possible implementation method, after sending the first signal corresponding to the low frequency band, the method further includes:

> receiving a third signal;
> determining whether the third signal is frequency-synchronized in the high frequency band; and
> if the third signal is not frequency-synchronized in the high frequency band, sending a fifth signal corresponding to the low frequency band.

In a possible implementation method, determining whether the third signal is frequency-synchronized in the high frequency band specifically includes:

> obtaining a second frequency offset corresponding to the high frequency band based on the third signal; and
> determining whether the second frequency offset is within a preset range, where if the second frequency offset is not within the preset range, the third signal is not frequency-synchronized in the high frequency band.

In a possible implementation method, determining whether the third signal is frequency-synchronized in the high frequency band specifically includes:
determining whether the third signal is correct, where if the third signal is incorrect, the third signal is not frequency-synchronized in the high frequency band.
In a possible implementation method, determining whether the third signal is correct specifically includes:
determining whether the third signal is correctly decoded, where if the third signal is not correctly decoded, the third signal is not frequency-synchronized in the high frequency band.
In a possible implementation method, after determining whether the third signal is frequency-synchronized in the high frequency band, the method further includes:
if the third signal is frequency-synchronized in the high frequency band, sending a fourth signal corresponding to the high frequency band.
In a possible implementation method, after sending the first signal corresponding to the low frequency band, the method further includes:
receiving a second signal corresponding to the high frequency band.
According to a third aspect, this application provides a communication apparatus. The communication apparatus may be a communication chip in a wireless communication system or a communication apparatus integrated with the communication chip, for example, may be a terminal device that provides a service for a user in a radio access network. The communication apparatus includes:

> an interface module, configured to receive a first signal corresponding to a low frequency band; and
> a processing module, configured to obtain a first frequency offset corresponding to a high frequency band based on the first signal, where the first frequency offset is used for frequency synchronization in the high frequency band.

In a possible implementation method,
the interface module is further configured to send a second signal corresponding to the high frequency band.
In a possible implementation method,
the interface module is specifically configured to: send a third signal, where the third signal is used to determine whether frequency synchronization is performed in the high frequency band; and after receiving a fourth signal corresponding to the high frequency band, send the second signal corresponding to the high frequency band.
In a possible implementation method,
the first frequency offset is specifically used for voltage or capacitance adjustment of a crystal oscillator.
In a possible implementation method,
the processing module is specifically configured to: obtain a time-domain signal that is in the first signal and that repeats at least two signal periods, where the at least two signal periods include a first signal period and a second signal period; and calculate the first frequency offset corresponding to the high frequency band based on an autocorrelation function of the time-domain signal.
The autocorrelation function meets a first formula:

$$\text{selfcorr} = \int_0^T s^*(t + t_1) \cdot s(t + t_2)$$

Herein, selfcorr is the autocorrelation function, t is a time variable of the time-domain signal, $t_1$ is an initial time of the first signal period, $t_2$ is an initial time of the second signal period, T is duration of the signal period, s(t) represents a time-domain signal function that changes with the time variable t, and s*(t) is a conjugate function of s(t).

The first frequency offset meets a second formula:

$$\Delta f = \arctan(\text{imag}(\text{selfcorr})/\text{real}(\text{selfcorr}))/(2 \cdot \pi \cdot (t_2 - t_1)/1000)$$

The first frequency offset meets a first constraint:

$$-\pi \le 2 \cdot \pi \cdot \Delta f \cdot (t_2 - t_1)/1000 \le \pi$$

Herein, $\Delta f$ is the first frequency offset, imag(selfcorr) is an imaginary part of the autocorrelation function, and real(selfcorr) is a real part of the autocorrelation function.

According to a fourth aspect, this application provides a communication apparatus. The communication apparatus may be a communication chip in a wireless communication system or a communication apparatus integrated with the communication chip, for example, may be a network device that is deployed in a radio access network and that provides a wireless communication function for a terminal device. The communication apparatus includes:
an interface module, configured to send a first signal corresponding to a low frequency band, where the first signal is used to determine a first frequency offset corresponding to a high frequency band.

In a possible implementation method, a processing module is further included.

The interface module is further configured to receive a third signal.

The processing module is configured to determine whether the third signal is frequency-synchronized in the high frequency band.

If the third signal is not frequency-synchronized in the high frequency band, the interface module is further configured to send a fifth signal corresponding to the low frequency band.

In a possible implementation method,
the processing module is specifically configured to: obtain a second frequency offset corresponding to the high frequency band based on the third signal; and determine whether the second frequency offset is within a preset range, where if the second frequency offset is not within the preset range, the third signal is not frequency-synchronized in the high frequency band.

In a possible implementation method,
the processing module is specifically configured to determine whether the third signal is correct, where if the third signal is incorrect, the third signal is not frequency-synchronized in the high frequency band.

In a possible implementation method,
the processing module is specifically configured to determine whether the third signal is correctly decoded.

In a possible implementation method,
if the third signal is frequency-synchronized in the high frequency band, the interface module is further configured to send a fourth signal corresponding to the high frequency band.

In a possible implementation method,
the interface module is further configured to receive a second signal corresponding to the high frequency band.

According to a fifth aspect, an embodiment of this application provides a communication apparatus. The communication apparatus includes a processor. The processor is configured to invoke and run a computer program stored in a memory, so that the processor implements any implementation of either the first aspect or the second aspect.

Optionally, the communication apparatus further includes a transceiver. The processor is further configured to control the transceiver to receive and send a signal.

Optionally, the communication apparatus includes the memory. The memory stores the computer program.

According to a sixth aspect, an embodiment of this application provides a computer-readable storage medium. The computer-readable storage medium stores a computer program or instructions. The computer program or the instructions are used to enable, when being executed by one or more computers, the one or more computers to perform the method according to any possible implementation of any one of the foregoing aspects.

According to a seventh aspect, an embodiment of this application provides a computer program product including instructions. When the computer program product runs on a computer, the computer is enabled to perform the method according to any one of the foregoing aspects.

According to an eighth aspect of this application, a chip apparatus is provided, including a processor, configured to be connected to a memory, and invoke a program stored in the memory, so that the processor implements any implementation of either the first aspect or the second aspect.

According to a ninth aspect, an embodiment of this application provides a communication system. The system includes the terminal device and the network device in the foregoing aspects.

The solutions provided in the second aspect to the ninth aspect are used to implement or cooperate to implement the method provided in the first aspect, and therefore, can achieve beneficial effects the same as or corresponding to those in the first aspect. Details are not described herein again.

**BRIEF DESCRIPTION OF DRAWINGS**

FIG. 1 is a diagram of a structure of a communication apparatus according to an embodiment of this application;
FIG. 2 is a diagram of a structure of a communication system according to an embodiment of this application;
FIG. 3 is a diagram of a structure of a communication system according to an embodiment of this application;
FIG. 4 is a diagram of a structure of a communication system according to an embodiment of this application;
FIG. 5 is a diagram of signaling exchange of a frequency synchronization method according to an embodiment of this application;
FIG. 6 is a circuit diagram of a crystal oscillator according to an embodiment of this application;
FIG. 7 is a diagram of signaling exchange of a frequency synchronization method according to an embodiment of this application;
FIG. 8 is a diagram of a structure of a communication apparatus according to an embodiment of this application;
FIG. 9 is a diagram of a structure of a communication apparatus according to an embodiment of this application;
FIG. 10 is a diagram of a simplified structure of a terminal device; and
FIG. 11 is a diagram of a structure of a communication apparatus according to an embodiment of this application.

**DESCRIPTION OF EMBODIMENTS**

To make objectives, technical solutions, and advantages of this application clearer, the following describes embodiments of this application with reference to the accompanying drawings. It is clear that the described embodiments are merely some but not all of embodiments of this application. A person of ordinary skill in the art may learn that, as a new application scenario emerges, the technical solutions provided in embodiments of this application are also applicable to a similar technical problem.

In the specification, claims, and the accompanying drawings of this application, the terms "first", "second", and so on are intended to distinguish between similar objects but do not necessarily indicate a specific order or sequence. It should be understood that the data used in such a way is interchangeable in proper cases, so that embodiments described herein can be implemented in an order other than the order in the content illustrated or described herein. Moreover, the terms "include", "contain" and any other variants thereof mean to cover the non-exclusive inclusion, for example, a process, method, system, product, or device that includes a list of steps or modules is not necessarily limited to those listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into units in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on actual requirements to achieve the objectives of the solutions of this application.

The technical solutions in embodiments of the present invention may be applied to various wireless communication systems, for example, a global system for mobile communications (global system for mobile communications, GSM), a code division multiple access (code division multiple access, CDMA) system, a wideband code division multiple access (wideband code division multiple access, WCDMA) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a 5G communication system, a wireless routing system, and a future wireless communication system.

A wireless communication system usually includes two frequency ranges: a low frequency band and a high frequency band. The high frequency band is also referred to as a millimeter-wave frequency band, and is mainly applied to an unlicensed frequency band. The low frequency band includes frequency bands such as 2.4/5/7 GHz, and the high frequency band includes frequency bands such as 45/60 GHz.

Physical layer protocols of the high frequency band (the millimeter-wave frequency band) and the low frequency band differ greatly. Commercialization and an ecosystem of a millimeter wave are yet to be fully developed. Therefore, if a physical layer frame format supported by the low frequency band can be used in the millimeter-wave frequency band, an original chip resource of the low frequency band can be basically reused to implement high-frequency-band communication, so that chip investment is reduced, a development cycle is shortened, and a market is quickly preempted.

However, a key challenge to this requirement is frequency synchronization. If a same frame format is used in the high frequency band and the low frequency band, tolerances of the high frequency band and the low frequency band to a frequency offset are equivalent. However, center frequencies of the high frequency band and the low frequency band differ greatly, to meet a frequency offset range, during a chip design, it may be considered to select two types of crystal oscillators with different specifications or select a uniform crystal oscillator with a higher requirement. However, the two manners both cause a chip cost increase. Therefore, how to design a frequency synchronization solution to meet a requirement for coexistence of the high frequency band and the low frequency band by using a low-cost method is a technical problem to be urgently resolved by persons skilled in the art.

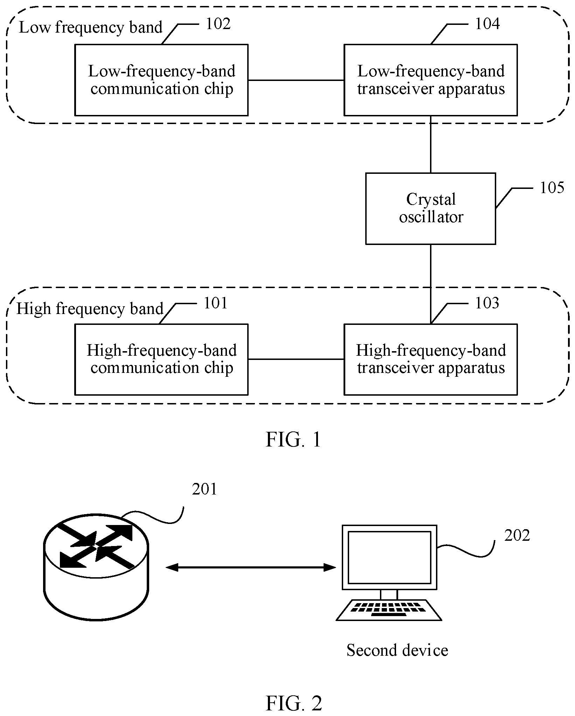

To resolve the foregoing problem, this application provides a frequency synchronization method and a related apparatus. The frequency synchronization method may be performed by a communication chip in a wireless communication system, or a communication apparatus integrated with the communication chip. For example, refer to FIG. 1. FIG. 1 is a diagram of a structure of a communication apparatus according to an embodiment of this application. The communication apparatus includes a high-frequency-band communication chip 101 and a low-frequency-band communication chip 102. Both the high-frequency-band communication chip 101 and the low-frequency-band communication chip 102 may be physical layer chips. The high-frequency-band communication chip 101 receives and sends high-frequency-band signals through a high-frequency-band transceiver apparatus 103, and the low-frequency-band communication chip 102 receives and sends low-frequency-band signals through a low-frequency-band transceiver apparatus 104. The high-frequency-band transceiver apparatus 103 and the low-frequency-band transceiver apparatus 104 may be radio frequency (radio frequency, RF) transceivers. The high-frequency-band transceiver apparatus 103 and the low-frequency-band transceiver apparatus 104 are connected to a same crystal oscillator 105, so that the communication apparatus can meet a requirement for sending and receiving a high-frequency-band signal and a low-frequency-band signal. It should be understood that FIG. 1 is merely a diagram of a possible structure according to an embodiment of this application. In an actual application process, the components are not limited to the foregoing specific connection manner, provided that high-frequency-band communication and the low frequency band coexist.

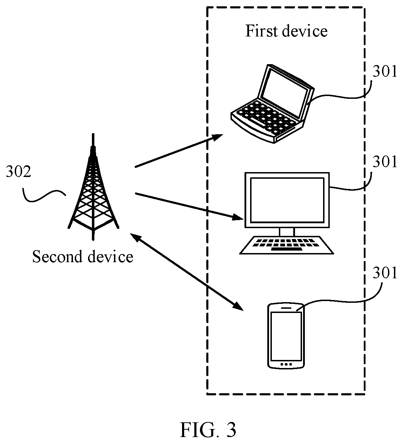

Refer to FIG. 2 and FIG. 3. FIG. 2 and FIG. 3 are two diagrams of a structure of a communication system according to an embodiment of this application. The frequency synchronization method provided in embodiments of this application may be implemented by the system in FIG. 2 or FIG. 3. The wireless communication system includes a first device and a second device. For example, the method may be applied to a scenario in which a single first device 201 is connected to a single second device 202 shown in FIG. 2, or may be applied to a scenario in which a plurality of first devices 301 are connected to a single second device 302 shown in FIG. 3. In other words, a quantity of second devices may be greater than 1.

A scenario in which the first device interacts with the second device may be interaction between a network device and a terminal device, or may be interaction between a terminal device and a terminal device. The first device may be a terminal device, and the second device may be a network device.

In embodiments of this application, the network device is an apparatus that is deployed in a radio access network and that provides a wireless communication function for the terminal device. The network device may include various forms of macro base stations, micro base stations (also referred to as small cells), relay stations, access points, and the like. The network device may be a device that communicates with the terminal device through an air interface and that is in an access network, or a network device in a vehicle-to-everything (vehicle-to-everything, V2X) technology is a road side unit (road side unit, RSU). The base station may be configured to perform conversion between a received over-the-air frame and an internet protocol (internet protocol, IP) packet, and serves as a router between the terminal device and other parts of the access network, where the other parts of the access network may include an IP network. The RSU may be a fixed infrastructure entity supporting V2X application, and exchanges a message with another entity supporting the V2X application. The network device may further coordinate attribute management of the air interface. The network device may have different names in systems that use different radio access technologies, for example, a base transceiver station (base transceiver station, BTS) in a global system for mobile communications (global system for mobile communications, GSM) or a code division multiple access (code division multiple access, CDMA) network, a NodeB (NodeB, NB) in wideband code division multiple access (wideband code division multiple access, WCDMA), and an eNB or eNodeB (evolved NodeB) in long term evolution (long term evolution, LTE). Alternatively, the network device may be a radio controller in a cloud radio access network (cloud radio access network, CRAN) scenario. Alternatively, the network device may be a base station device in a future 5G network or a network device in a future evolved public land mobile network (public land mobile network, PLMN). Alternatively, the network device may be a wearable device or a vehicle-mounted device. Alternatively, the network device may be a transmission and reception point (transmission and reception point, TRP). Alternatively, the network device may include a core network device, and the core network device includes, for example, an access and mobility management function (access and mobility management function, AMF). It should be noted that the RSU may be a network RSU, or may be a terminal device RSU. When the RSU is used as the network RSU, the RSU performs a function of the network device. When the RSU is used as the terminal device RSU, the RSU performs a function of the terminal device.

In this embodiment of this application, the terminal device includes a device that provides a service for a user, a device that provides data connectivity for the user, and a device that provides a service and data connectivity for the user. It may be understood that the terminal device may include various handheld devices, vehicle-mounted devices, wearable devices, or computing devices that have a wireless communication function, or other processing devices connected to a wireless modem. The device may communicate with a core network through a radio access network (radio access network, RAN), and exchange a service or data with the RAN, or exchange a service and data with the RAN. It should be noted that the terminal device is represented in a plurality of manners. For example, the terminal device may include user equipment (user equipment, UE), a wireless terminal, a mobile terminal, a device-to-device (device-to-device, D2D) terminal, a vehicle-to-everything (vehicle-to-everything, V2X) terminal (an vehicle-mounted terminal, for example, an on-board unit (on-board unit, OBU)), a road side unit (road side unit, RSU), a machine-to-machine/machine type communication (machine-to-machine/machine type communication, M2M/MTC) terminal, and an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), or a user device (user device). For another example, the terminal device may include a mobile phone (or referred to as a "cellular" phone), a computer with a mobile terminal, or a portable, pocket-sized, handheld, or computer built-in mobile apparatus. For another example, the terminal device may include a personal communication service (personal communication service, PCS) phone, a cordless phone, a session initiation protocol (session initiation protocol, SIP) phone, a wireless local loop (wireless local loop, WLL) station, a cellular phone (cellular phone), a smartphone (smartphone), a wireless data card, a personal digital assistant (personal digital assistant, PDA), a tablet computer, a wireless modem (modem), a handheld device (handset), a laptop computer (laptop computer), and a machine type communication (machine type communication, MTC) terminal. For another example, the terminal device may include a limited device, for example, a device with low power consumption, a device with a limited storage capability, or a device with a limited computing capability. For another example, the terminal device may include an information sensing device like a barcode, radio frequency identification (radio frequency identification, RFID), a sensor, a global positioning system (global positioning system, GPS), or a laser scanner. For another example, the terminal device may alternatively include a wearable device, an uncrewed aerial vehicle, an uncrewed ground vehicle, and a shipborne terminal. The wearable device may also be referred to as a wearable intelligent device, an intelligent wearable device, or the like, and is a general term of wearable devices that are intelligently designed and developed for daily wear using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

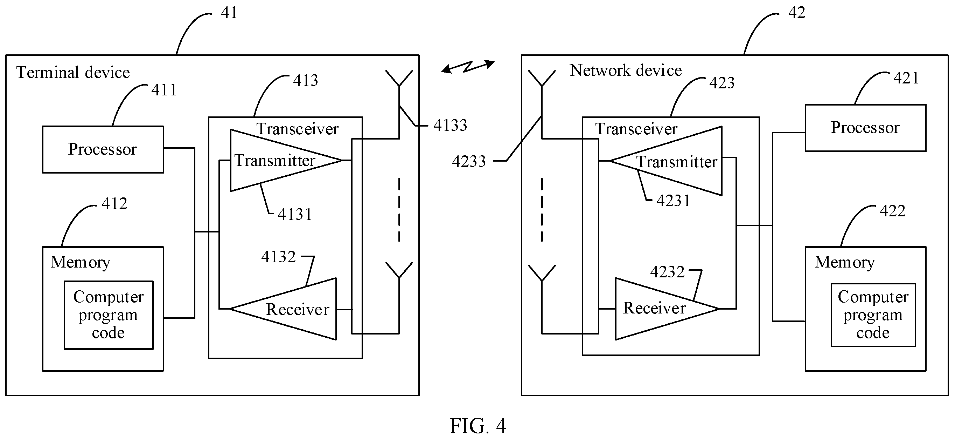

In the communication system, communication between each network device and each terminal device may alternatively be represented in another form. As shown in FIG. 4, a terminal device 41 includes a processor 411, a memory 412, and a transceiver 413, and the transceiver 413 includes a transmitter 4131, a receiver 4132, and an antenna 4133. A network device 42 includes a processor 421, a memory 422, and a transceiver 423. The transceiver 423 includes a transmitter 4231, a receiver 4232, and an antenna 4233. The receiver 4132 may be configured to receive transmission control information through the antenna 4133, and the transmitter 4131 may be configured to send transmission feedback information to the network device 42 through the antenna 4133. The transmitter 4231 may be configured to send the transmission control information to the terminal device 41 through the antenna 4233, and the receiver 4232 may be configured to receive, through the antenna 4233, the transmission feedback information sent by the terminal device 41.

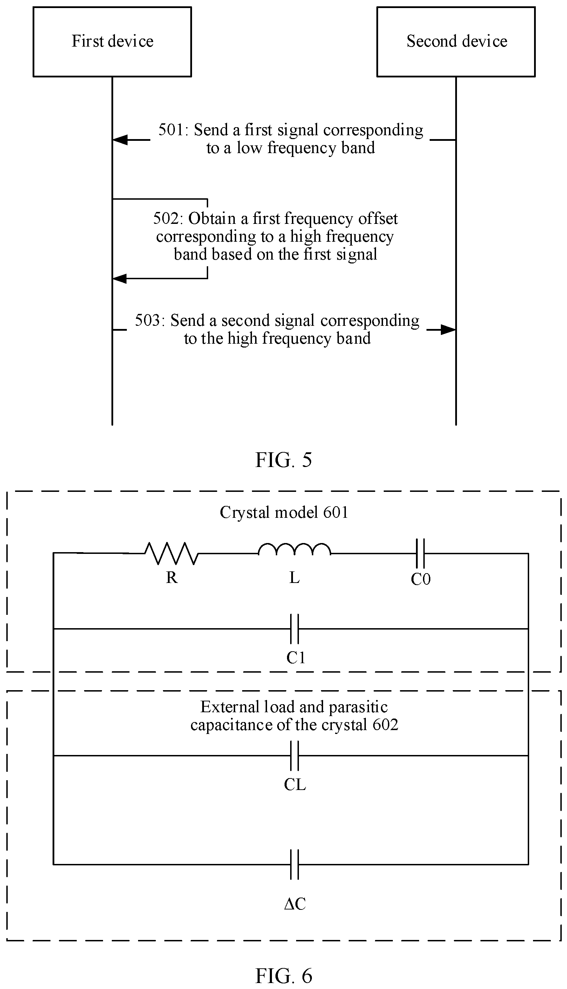

The following describes in detail the frequency synchronization method provided in embodiments of this application. For ease of understanding, refer to FIG. 5. FIG. 5 is a diagram of signaling exchange of the frequency synchronization method according to an embodiment of this application. A first device and a second device may be specifically terminal devices, network devices, or physical layer chips thereof. As shown in FIG. 5, this embodiment includes the following steps.

501: The second device sends a first signal corresponding to a low frequency band, that is, the first device receives the first signal corresponding to the low frequency band.

It may be understood that the first signal sent by the second device may be directionally sent to the first device, or may be simultaneously sent to a plurality of other communication apparatuses. The first signal is used to determine a first frequency offset corresponding to a high frequency band. Alternatively, the first signal may be first generated in the second device, and then sent by a corresponding transceiver apparatus in the low frequency band. Similarly, the first signal received by the first device may be sent by the second device, or may be sent by another signal sending device.

In addition, the first signal corresponding to the low frequency band is a signal transmitted in the low frequency band. In other words, the first device may have a communication function, and directly receive the first signal from the low frequency band. Alternatively, the first device may be a physical (physical, PHY) layer chip, and a corresponding transceiver apparatus (for example, a radio frequency (radio frequency, RF) signal transceiver) receives the first signal corresponding to the low frequency band. Similarly, the second device may send the first signal in the low frequency band, or may send, through the corresponding transceiver apparatus, the first signal corresponding to the low frequency band.

It may be understood that, in a scenario with a lower frequency, a frequency offset requirement between a signal receiving end and a signal sending end is also lower, and a tolerance of a frequency range is higher.

In this embodiment of this application, the second device first sends the first signal to the first device in the low frequency band, where the signal is used by the first device to determine the first frequency offset for performing high-frequency-band communication.

502: The first device obtains the first frequency offset corresponding to the high frequency band based on the first signal.

The first frequency offset corresponding to the high frequency band refers to a frequency offset that meets a high-frequency-band communication requirement. Therefore, the first frequency offset is used for frequency synchronization in the high frequency band. In this embodiment of this application, the first signal is sent by the second device. To implement communication with the second device in the high frequency band, the first frequency offset is a frequency difference between center frequencies of the first device and the second device.

After the first device receives the first signal, the first device may obtain a center frequency of the second device based on the first signal, to calculate the frequency difference between the center frequencies of the first device and the second device.

It may be understood that, to implement high-frequency-band communication between the first device and the second device, the frequency difference between the first device and the second device needs to be within a frequency offset tolerance range of a high-frequency-band communication scenario. Therefore, after the first frequency offset is calculated, a center frequency of the first device is adjusted based on the first frequency offset, so that the difference between the center frequency of the first device and the center frequency of the second device is within a preset frequency range.

For example, the first device obtains the center frequency $f_2$ of the second device based on the first signal, and a current center frequency of the first device is $f_1$. A frequency difference $\Delta f = f_2 - f_1$ is obtained through calculation. Generally, a frequency offset tolerance that meets a low-frequency-band communication requirement is high. For example, a frequency offset tolerance range of a 5 GHz frequency band is $\pm 20$ ppm (part per million). In other words, when a value of $\dfrac{\Delta f}{f_2}$ is within a range of $\pm 20$ ppm, the second device can successfully receive the first signal in the 5 GHz frequency band. However, in a communication scenario with a higher frequency, a frequency offset between a receiving end and a sending end of a signal is multiplied. On a premise that the first device meets the low-frequency-band communication requirement, a high-frequency-band communication requirement is not necessarily met. To enable signals sent by the first device and the second device in the high frequency band and the low frequency band to coexist, the center frequency of the first device needs to be correspondingly adjusted, so that the first device performs frequency synchronization in the high frequency band.

For example, it is assumed that a frequency offset requirement of 50 GHz is 10 times higher than that of 5 GHz. In other words, an allowable frequency offset range in the 50 GHz frequency band is $\pm 2$ ppm. Therefore, after the frequency difference $\Delta f$ is obtained through calculation, if $\dfrac{\Delta f}{f_2}$ does not fall within the range of $\pm 2$ ppm, the center frequency of the first device needs to be adaptively adjusted. For example, a crystal oscillator of the first device is adjusted to implement frequency synchronization. It may be understood that an adjusted center frequency of the first device is $f_1'$. In this case, the frequency difference $\Delta f' = f_2 - f_1'$, and $\Delta f'$ needs to meet that a value of $\dfrac{\Delta f'}{f_2}$ is within the range of $\pm 2$ ppm.

In a possible implementation method, the first device is a physical layer chip, and step 502 specifically includes:

obtaining a time-domain signal in the first signal; and
calculating the first frequency offset corresponding to the high frequency band based on an autocorrelation function of the time-domain signal in a period.

It may be understood that the first signal includes time-domain signals of several signal periods, and a time-domain signal that repeats at least two signal periods is denoted as s(t), where t is a time variable. The at least two signal periods include a first signal period and a second signal period.

An initial time of the first signal period is defined as $t_1$, an initial time of the second signal period is defined as $t_2$, and duration of a signal period is defined as T. In this case, in the first signal period, $t_1 \leq t \leq t_1 + T$ is met, and in the second signal period, $t_2 \leq t \leq t_2 + T$ is met. The autocorrelation function of the time-domain signal meets the following first formula:

$$\text{selfcorr} = \int_0^T s^*(t + t_1) \cdot s(t + t_2) \tag{1}$$

Herein, selfcorr is the autocorrelation function of the time-domain signal, t is the time variable of the time-domain signal, s(t) represents a time-domain signal function that changes with the time variable t, and s*(t) is a conjugate function of s(t). In addition, units of $t_1$, $t_2$, t, and T are unified as a microsecond ($\mu$s) to facilitate calculation.

The first frequency offset corresponding to the high frequency band may be obtained through calculation based on the autocorrelation function of the time-domain signal, and the first frequency offset meets the following second formula:

$$\Delta f = \arctan(\text{imag}(\text{selfcorr})/\text{real}(\text{selfcorr}))/(2 \cdot \pi \cdot (t_2 - t_1)/1000) \tag{2}$$

Herein, $\Delta f$ is the first frequency offset and meets a constraint $-\pi \leq 2 \cdot \pi \cdot \Delta f \cdot (t_2 - t_1)/1000 \leq \pi$, imag(selfcorr) is an imaginary part of the autocorrelation function, real(selfcorr) is a real part of the autocorrelation function, and arctan represents an arc tangent function. A unit of the first frequency offset $\Delta f$ obtained through calculation according to the foregoing second formula is kHz.

It may be understood that, in this embodiment, the time-domain signal in the first signal is obtained, and then the frequency difference between the first device and the second device, namely, the first frequency offset, is calculated based on the autocorrelation function of the time-domain signal. In an actual application process, persons skilled in the art may alternatively obtain the first frequency offset by using another frequency offset calculation or estimation method. Details are not described in this application. In a possible implementation method, after the first device obtains the first frequency offset through calculation, the first frequency offset is specifically used for voltage or capacitance adjustment of the crystal oscillator.

It may be understood that the first device may directly adjust a voltage or a capacitance of the crystal oscillator based on the first frequency offset, or may generate a configuration parameter of the crystal oscillator based on the first frequency offset, where the configuration parameter is used to adjust the crystal oscillator.

Refer to FIG. 6. FIG. 6 is a circuit diagram of the crystal oscillator according to an embodiment of this application. The crystal oscillator includes a crystal model 601 and an external load and parasitic capacitance 602 of the crystal.

An oscillation frequency of the crystal model meets the following third formula:

$$f_1 = \frac{1}{2\pi \sqrt{L \cdot \frac{C_0 \cdot (C_1 + C_L + \Delta C)}{C_0 + (C_1 + C_L + \Delta C)}}} \tag{3}$$

Herein, $f_1$ is the oscillation frequency of the crystal, R is an equivalent series resistance in the crystal, L is an equivalent series inductance in the crystal, C0 is an equivalent series capacitance in the crystal, CL is a default external load capacitance of the crystal, $\Delta C$ is an adjustable capacitance, and C1 is a static capacitance in the crystal.

The configurable capacitance $\Delta C$ is adjusted, to obtain a corresponding crystal frequency value $f_1$ through pre-test.

Adjustment information may be obtained based on the first frequency offset measured in step 302, and the adjustment information meets the following fourth formula:

$$\frac{f_{1,\text{old}} - f_{1,\text{new}}}{f_{1,\text{old}}} = \frac{\Delta f}{f_2} \cdot 10^{-6} \tag{4}$$

Herein, $f_{1,\text{old}}$ is a current oscillation frequency of the crystal, $f_{1,\text{new}}$ is a target oscillation frequency of the crystal,

$\frac{\Delta f}{f_2}$ is the adjustment information, and a unit of the adjustment information is ppm.

The fourth formula is converted to obtain:

$$f_{1,new} = \left(1 - \frac{\Delta f}{f_2} \cdot 10^{-6}\right) \cdot f_{1,old} \tag{5}$$

A value $\Delta C$ of the configurable capacitance can be correspondingly obtained based on a result of $f_{1,new}$. Frequency synchronization can be completed by configuring the configurable capacitance.

In an optional implementation method, after step 502, the method further includes the following step.

503: The first device sends a second signal corresponding to the high frequency band, that is, the second device receives the second signal corresponding to the high frequency band.

After the first device performs frequency synchronization in the high frequency band, it indicates that communication between the first device and the second device in the high frequency band is implemented. Therefore, the first device may send the second signal corresponding to the high frequency band, and the second signal is received by the second device. It should be understood that, after the first device and the second device implement high-frequency-band communication, the first device and the second device may still continue performing low-frequency-band communication.

According to the frequency synchronization method provided in this embodiment of this application, the first device first performs frequency offset calculation by using the first signal in the low frequency band, and then adjusts the center frequency of the first device based on the frequency offset calculation result. A specific implementation is converting the adjustment information or configuration information of the crystal oscillator, to adjust the crystal oscillator, so as to perform frequency synchronization. In the low frequency band, signal attenuation is small, received signal strength is large, and frequency offset calculation is more accurate. Frequency synchronization can be easily completed by receiving a downlink low-frequency-band signal. In this method, a low-cost low-frequency-band crystal oscillator is adjusted to meet a requirement for subsequent communication in the high frequency band. This method may be directly improved and applied on an existing low-frequency-band crystal oscillator, and can achieve a frequency synchronization effect without additional costs. This resolves a problem of cost increase caused by chip improvement or replacement in a current related technology, and implements effect of meeting a requirement for coexistence of the high frequency band and the low frequency band by using a simple low-cost method.

Further, it may be understood that after the first device performs frequency synchronization based on the first frequency offset, a theoretical high-frequency-band communication requirement is met, but in actual signal transmission, the high-frequency-band communication requirement may not be met. Therefore, an embodiment of this application further provides a check method.

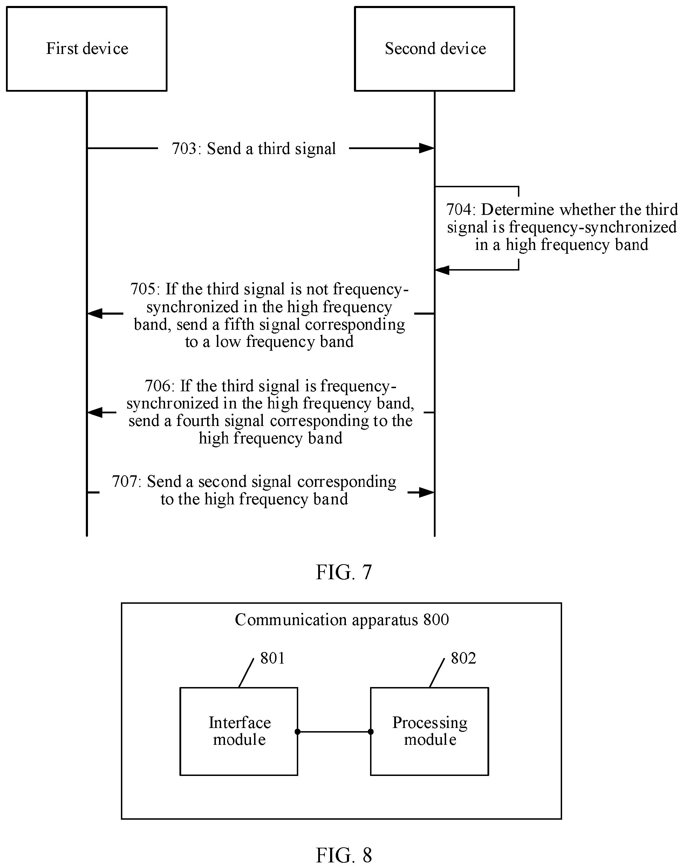

Refer to FIG. 7. FIG. 7 is a diagram of signaling exchange of the frequency synchronization method according to an embodiment of this application.

After step 502, the method further includes the following steps.

703: The first device sends a third signal, that is, the second device receives the third signal.

It may be understood that after the first device performs frequency synchronization, any sent signal (regardless of a signal transmitted in the low frequency band or a signal transmitted in the high frequency band) needs to correspond to a frequency of the high frequency band.

704: The second device determines whether the third signal is frequency-synchronized in the high frequency band.

After receiving the third signal, the second device may determine, by using the third signal, whether the first device performs frequency synchronization in the high frequency band.

In a possible implementation method, step 704 specifically includes:

obtaining a second frequency offset corresponding to the high frequency band based on the third signal; and
determining whether the second frequency offset is within a preset range, where if the second frequency offset is not within the preset range, the third signal is not frequency-synchronized in the high frequency band.

It may be understood that the second device may obtain the center frequency of the first device from the third signal in a manner similar to that in step 502. The difference between the center frequency of the first device and the center frequency of the second device is the second frequency offset $\Delta f'$ corresponding to the high frequency band. If the second frequency offset is less than a preset range, that is, $|\Delta f'| \leq |f_2 \cdot x_{thr}|$, it is considered that the first device completes frequency synchronization in the high frequency band, where a unit of $x_{thr}$ is ppm, and represents a preset threshold. The frequency tolerance range of the 50 GHz frequency band in step 502 is used as an example, and in this case, $x_{thr} = \pm 20$. If the second frequency offset is greater than the preset range, that is, $|\Delta f'| > |f_2 \cdot x_{thr}|$, it is considered that the first device does not complete frequency synchronization.

In another possible implementation method, step 704 specifically includes:

determining whether the third signal is correct, where if the third signal is incorrect, the third signal is not frequency-synchronized in the high frequency band.

It may be understood that the frequency offset affects signal receiving accuracy. Therefore, whether the first device is synchronized in the high frequency band may alternatively be determined by determining whether the third signal is correct.

There are many manners of determining whether the third signal is correct. This embodiment of this application provides a specific determining method, that is, it is determined whether the third signal is correctly decoded. If the third signal is incorrect, the third signal is not frequency-synchronized in the high frequency band.

It may be understood that signal transmission is usually accompanied by encoding and decoding. Data transmission at a physical layer is used as an example. After receiving the third signal, the second device decodes the third signal. If the third signal is correctly received, according to a physical layer receiving algorithm, a physical protocol data unit (physical protocol data unit, PPDU) data (data) cyclic redundancy check (cyclic redundancy check, CRC) is correct. In other words, if the PPDU data CRC check is correct, it is considered that the first device completes frequency synchronization in the high frequency band. Alternatively, if the third signal is not correctly received, that is, the PPDU data CRC check is incorrect, it is considered that the first device does not complete frequency synchronization in the high frequency band.

The foregoing two possible implementation methods for determining frequency synchronization provided in this embodiment of this application are not limited thereto. This is not limited in this application either.

705: If the third signal is not frequency-synchronized in the high frequency band, the second device sends a fifth signal corresponding to the low frequency band, that is, the first device receives the fifth signal corresponding to the low frequency band.

If the second device determines that the first device does not complete frequency synchronization in the high frequency band, that is, the center frequency of the first device still does not meet the high-frequency-band communication requirement, the second device continues to communicate with the first device based on the low frequency band, and sends the fifth signal corresponding to the low frequency band.

It may be understood that, after the first device receives the fifth signal of the low frequency band, similar to processing of the first signal, the first device obtains a third frequency offset corresponding to the high frequency band based on the fifth signal. The third frequency offset is also used for frequency synchronization in the high frequency band. Details are not described herein again. It should be understood that, even if the first device has completed synchronization in the high frequency band, the second device may still determine a frequency synchronization status of the first device based on a received signal, to continue to send a signal corresponding to the low frequency band to the first device. Similarly, the first device may continue to track and adjust the crystal oscillator based on the received signal, and continuously perform frequency adjustment and synchronization.

706: If the third signal is frequency-synchronized in the high frequency band, the second device sends a fourth signal corresponding to the high frequency band, that is, the first device receives the fourth signal corresponding to the high frequency band.

If the second device determines that the first device completes frequency synchronization in the high frequency band, that is, the center frequency of the first device meets the high-frequency-band communication requirement, the second device may subsequently start high-frequency-band communication, and send the fourth signal corresponding to the frequency band.

707: The first device sends the second signal corresponding to the high frequency band.

After the first device receives the fourth signal from the high frequency band, it may indicate that the second device allows the first device to communicate with the second device in the high frequency band. Therefore, the first device may subsequently send the second signal corresponding to the high frequency band. In this case, the first device completes frequency synchronization with the first device in the high frequency band. Further, after the first device completes frequency synchronization, the second device may still determine a frequency synchronization status of the first device based on a received signal, to continue to send a signal corresponding to the low frequency band to the first device. Similarly, the first device may continue to track and adjust the crystal oscillator based on the received signal, and continuously perform frequency adjustment and synchronization.

Based on the embodiment shown in FIG. 5, the frequency synchronization method provided in this embodiment of this application further includes that the second device determines whether a signal sent by the first device after frequency synchronization is performed in the high frequency band meets the high-frequency-band communication requirement, to dynamically adjust the frequency of the high frequency band.

The foregoing describes in detail the frequency synchronization method provided in embodiments of this application. The following describes a communication apparatus provided in embodiments of this application.

Refer to FIG. 8. FIG. 8 is a diagram of a structure of a communication apparatus according to an embodiment of this application. A communication apparatus 800 may be a communication chip in a wireless communication system or a communication apparatus integrated with the communication chip, for example, may be a terminal device that provides a service for a user in a radio access network, and may be configured to perform the following steps performed by the first device in the embodiment shown in FIG. 5 or FIG. 7. For details, refer to the related descriptions in the foregoing method embodiments.

The communication apparatus includes an interface module 801 and a processing module 802.

The interface module 801 may implement a corresponding communication function. The interface module 801 may also be referred to as a communication interface or a communication unit. The processing module 802 is configured to perform a processing operation.

Optionally, the communication apparatus 800 may further include a storage module. The storage module may be configured to store instructions and/or data. The processing module 802 may read the instructions and/or the data in the storage module, so that the communication apparatus implements the method embodiment shown in FIG. 5 or FIG. 7.

The communication apparatus 800 may be configured to perform an action performed by the first device in the foregoing method embodiments. The communication apparatus 800 may be the first device or a component that can be disposed in the first device. The interface module 801 is configured to perform a receiving-related operation on a first device side in the foregoing method embodiments, and the processing module 802 is configured to perform a processing-related operation on the first device side in the foregoing method embodiments.

Optionally, the interface module 801 may include a sending module and a receiving module. The sending module is configured to perform a sending operation of the first device in the method embodiment shown in FIG. 5 or FIG. 7. The receiving module is configured to perform a receiving operation of the first device in the method embodiment shown in FIG. 5 or FIG. 7.

It should be noted that the communication apparatus 800 may include the sending module, but does not include the receiving module. Alternatively, the communication apparatus 800 may include the receiving module, but does not include the sending module. This may be specifically determined based on whether the foregoing solution performed by the communication apparatus 800 includes a sending action and a receiving action.

For example, the communication apparatus 800 is configured to perform the following solution.

The interface module 801 is configured to receive a first signal corresponding to a low frequency band.

The processing module 802 is configured to obtain a first frequency offset corresponding to a high frequency band based on the first signal, where the first frequency offset is used for frequency synchronization in the high frequency band.

In a possible implementation, the interface module 801 is further configured to send a second signal corresponding to the high frequency band.

In a possible implementation, the interface module 801 is specifically configured to: send a third signal, where the third signal is used to determine whether frequency synchronization is performed in the high frequency band; and after receiving a fourth signal corresponding to the high frequency band, send the second signal corresponding to the high frequency band.

In a possible implementation, the first frequency offset is specifically used for voltage or capacitance adjustment of a crystal oscillator.

In a possible implementation, the processing module is specifically configured to:
obtain a time-domain signal that is in the first signal and that repeats at least two signal periods, where the at least two signal periods include a first signal period and a second signal period; and calculate the first frequency offset corresponding to the high frequency band based on an autocorrelation function of the time-domain signal.

The autocorrelation function meets a first formula:

$$\mathrm{selfcorr} = \int_0^T s^*(t + t_1) \cdot s(t + t_2)$$

Herein, selfcorr is the autocorrelation function, t is a time variable of the time-domain signal, $t_1$ is an initial time of the first signal period, $t_2$ is an initial time of the second signal period, T is duration of the signal period, s(t) represents a time-domain signal function that changes with the time variable t, and s*(t) is a conjugate function of s(t).

The first frequency offset meets a second formula:

$$\Delta f = \arctan(\mathrm{imag}(\mathrm{selfcorr})/\mathrm{real}(\mathrm{selfcorr}))/(2 \cdot \pi \cdot (t_2 - t_1)/1000)$$

The first frequency offset meets a first constraint:

$$-\pi \leq 2 \cdot \pi \cdot \Delta f \cdot (t_2 - t_1)/1000 \leq \pi$$

Herein, $\Delta f$ is the first frequency offset, imag(selfcorr) is an imaginary part of the autocorrelation function, and real(selfcorr) is a real part of the autocorrelation function.

In this embodiment, the communication apparatus first receives a signal corresponding to the low frequency band, calculates, based on the signal, a frequency offset that meets high-frequency-band communication, and then adjusts a center frequency of the communication apparatus based on a frequency offset calculation result, to implement frequency synchronization that meets a high-frequency-band communication requirement. Due to small signal attenuation, large received signal strength, and more accurate frequency offset calculation of the low frequency band, frequency synchronization can be easily completed by receiving a downlink low-frequency-band signal. In this method, a low-cost low-frequency-band crystal oscillator is adjusted to meet a requirement for subsequent communication in the high frequency band. This method may be directly improved and applied on an existing low-frequency-band crystal oscillator, and can achieve a frequency synchronization effect without additional costs. This resolves a problem of cost increase caused by chip improvement or replacement in a current related technology, and implements effect of meeting a requirement for coexistence of the high frequency band and the low frequency band by using a simple low-cost method.

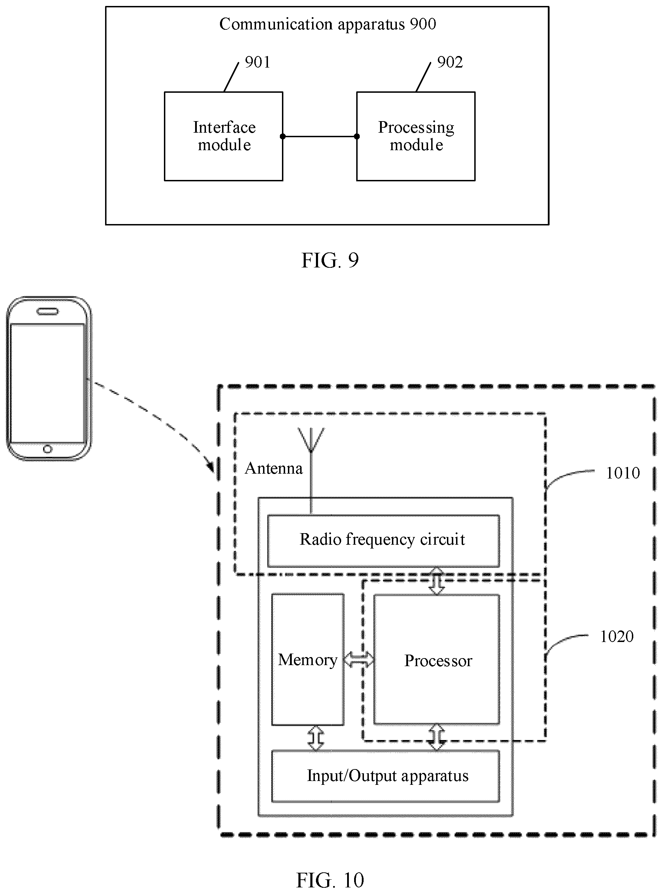

Refer to FIG. 9. FIG. 9 is a diagram of a structure of a communication apparatus according to an embodiment of this application. A communication apparatus 900 may be a communication chip in a wireless communication system or a communication apparatus integrated with the communication chip, for example, may be a network device that is deployed in a radio access network and that provides a wireless communication function for a terminal device, and may be configured to perform the following steps performed by the second device in the embodiment shown in FIG. 5 or FIG. 7. For details, refer to the related descriptions in the foregoing method embodiments.

The communication apparatus 900 includes an interface module 901 and a processing module 902.

The interface module 901 may implement a corresponding communication function. The interface module 901 may also be referred to as a communication interface or a communication unit. The processing module 902 is configured to perform a processing operation.

Optionally, the communication apparatus 900 may further include a storage module. The storage module may be configured to store instructions and/or data. The processing module 902 may read the instructions and/or the data in the storage module, so that the communication apparatus implements the method embodiment shown in FIG. 5 or FIG. 7.

The communication apparatus 900 may be configured to perform an action performed by the network device in the foregoing method embodiments. The communication apparatus 900 may be a network device or a component that can be disposed in the network device. The interface module 901 is configured to perform a receiving-related operation on a network device side in the foregoing method embodiments, and the processing module 902 is configured to perform a processing-related operation on the network device side in the foregoing method embodiments.

Optionally, the interface module 901 may include a sending module and a receiving module. The sending module is configured to perform a sending operation of the network device in the method embodiment shown in FIG. 5 or FIG. 7. The receiving module is configured to perform a receiving operation of the network device in the method embodiment shown in FIG. 5 or FIG. 7.

It should be noted that the communication apparatus 900 may include the sending module, but does not include the receiving module. Alternatively, the communication apparatus 900 may include the receiving module, but does not include the sending module. This may be specifically determined based on whether the foregoing solution performed by the communication apparatus 900 includes a sending action and a receiving action.

For example, the communication apparatus 900 may be configured to perform the following solution.

The interface module 901 is configured to send a first signal corresponding to a low frequency band, where the first signal is used to determine a first frequency offset corresponding to a high frequency band.

In a possible implementation,

the interface module 901 is further configured to receive a third signal;
the processing module 902 is configured to determine whether the third signal is frequency-synchronized in the high frequency band; and
if the third signal is not frequency-synchronized in the high frequency band, the interface module is further configured to send a fifth signal corresponding to the low frequency band.

In a possible implementation,
the processing module 902 is specifically configured to: obtain a second frequency offset corresponding to the high frequency band based on the third signal; and determine whether the second frequency offset is within a preset range, where if the second frequency offset is not within the preset range, the third signal is not frequency-synchronized in the high frequency band.

In a possible implementation,
the processing module 902 is specifically configured to determine whether the third signal is correct, where if the third signal is incorrect, the third signal is not frequency-synchronized in the high frequency band.

In a possible implementation,
the processing module 902 is specifically configured to determine whether the third signal is correctly decoded.

In a possible implementation, if the third signal is frequency-synchronized in the high frequency band, the interface module is further configured to send a fourth signal corresponding to the high frequency band.

In a possible implementation,
the interface module 901 is further configured to receive a second signal corresponding to the high frequency band.

FIG. 10 is a diagram of a simplified structure of a terminal device. A first device may be specifically the terminal device. For ease of understanding and illustration, in FIG. 10, an example in which the terminal device is a mobile phone is used. As shown in FIG. 10, the terminal device includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus, for example, a touchscreen, a display, or a keyboard, is mainly configured to: receive data input by a user and output data to the user.

It should be noted that some types of terminal devices may have no input/output apparatus.

When needing to send data, after performing baseband processing on to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, FIG. 10 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have receiving and sending functions may be considered as a transceiver unit of the terminal device, and the processor that has a processing function may be considered as a processing unit of the terminal device. As shown in FIG. 10, the terminal device includes a transceiver unit 1010 and a processing unit 1020. The transceiver unit may also be referred to as a transceiver, a transceiver machine, a transceiver apparatus, or the like. The processing unit may also be referred to as a processor, a processing board, a processing module, a processing apparatus, or the like.

Optionally, a device that is in the transceiver unit 1010 and that is configured to implement a receiving function may be considered as a receiving unit, and a device that is in the transceiver unit 1010 and that is configured to implement a sending function may be considered as a sending unit. In other words, the transceiver unit 1010 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1010 is configured to perform a sending operation and a receiving operation of the first device in the method embodiments, and the processing unit 1020 is configured to perform an operation other than the sending and receiving operations of the first device in the method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

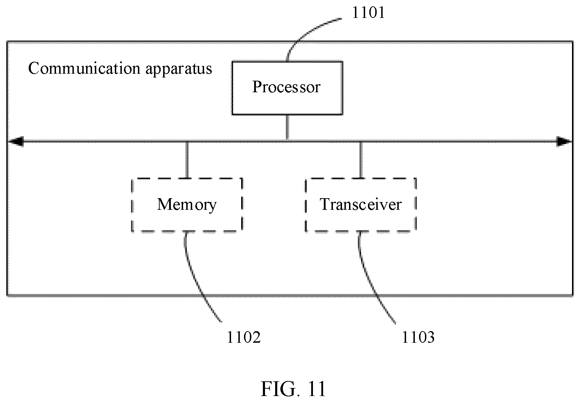

This application further provides a communication apparatus. FIG. 11 is another diagram of a structure of a communication apparatus according to an embodiment of this application. The communication apparatus may be configured to perform the steps performed by the first device or the second device in the embodiment shown in FIG. 5 or FIG. 7. For details, refer to the related descriptions in the foregoing method embodiments.

The communication apparatus includes a processor 1101. Optionally, the communication apparatus further includes a memory 1102 and a transceiver 1103.

In a possible implementation, the processor 1101, the memory 1102, and the transceiver 1103 are separately connected through a bus, and the memory stores computer instructions.

The processing module 902 in the foregoing embodiment may be specifically the processor 1101 in this embodiment. Therefore, a specific implementation of the processor 1101 is not described again. The interface module 901 in the foregoing embodiment may be specifically the transceiver 1103 in this embodiment. Therefore, a specific implementation of the transceiver 1103 is not described again.

An embodiment of this application further provides a communication system. The communication system includes a first device and a second device. The first device is configured to perform all or some of the steps performed by the first device in the embodiment shown in FIG. 5 or FIG. 7. The second device is configured to perform all or some of the steps performed by the second device in the embodiment shown in FIG. 5 or FIG. 7.

An embodiment of this application further provides a computer program product including instructions. When the computer program product runs on a computer, the computer is enabled to perform the communication method in the embodiment shown in FIG. 5 or FIG. 7.

An embodiment of this application further relates to a computer-readable storage medium, including a computer program or instructions stored in the computer-readable storage medium. When the computer program or the instructions are executed by one or more computers, the steps of the method in the embodiment shown in FIG. 5 or FIG. 7 are implemented.

An embodiment of this application further relates to a computer program product including instructions. When the computer program product runs on a computer, the computer is enabled to perform the steps of the method in the embodiment shown in FIG. 5 or FIG. 7.

An embodiment of this application further relates to a chip apparatus, including a processor, configured to be connected to a memory, and invoke a program stored in the memory, so that the processor implements the method in the embodiment shown in FIG. 5 or FIG. 7. An embodiment of this application further relates to a communication system. The system includes the terminal device and the network device in the foregoing aspects.

Method or algorithm steps described in combination with the content disclosed in this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC). In addition, the ASIC may be located in a terminal. Certainly, the processor and the storage medium may alternatively exist in a first communication apparatus as discrete components.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, the part contributing to the related technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. A frequency synchronization method, comprising:

   receiving a first signal corresponding to a low frequency band; and
   obtaining a first frequency offset corresponding to a high frequency band based on the first signal, wherein the first frequency offset is used for frequency synchronization in the high frequency band.

2. The method according to claim 1, wherein after obtaining the first frequency offset corresponding to the high frequency band based on the first signal, the method further comprises:
   sending a second signal corresponding to the high frequency band.

3. The method according to claim 2, wherein sending the second signal corresponding to the high frequency band specifically comprises:

   sending a third signal, wherein the third signal is used to determine whether frequency synchronization is performed in the high frequency band; and
   after receiving a fourth signal corresponding to the high frequency band, sending the second signal corresponding to the high frequency band.

4. The method according to any one of claims 1 to 3, wherein the first frequency offset is specifically used for voltage or capacitance adjustment of a crystal oscillator.

5. The method according to any one of claims 1 to 4, wherein obtaining the first frequency offset corresponding to the high frequency band based on the first signal specifically comprises:

   obtaining a time-domain signal that is in the first signal and that repeats at least two signal periods, wherein the at least two signal periods comprise a first signal period and a second signal period; and
   calculating the first frequency offset corresponding to the high frequency band based on an autocorrelation function of the time-domain signal, wherein
   the autocorrelation function meets a first formula:

$$\mathrm{selfcorr} = \int_0^T s^*(t + t_1) \cdot s(t + t_2)\,, \mathrm{wherein}$$

selfcorr is the autocorrelation function, t is a time variable of the time-domain signal, $t_1$ is an initial time of the first signal period, $t_2$ is an initial time of the second signal period, T is duration of the signal period, s(t) represents a time-domain signal function that changes with the time variable t, and s*(t) is a conjugate function of s(t);
the first frequency offset meets a second formula:

$$\Delta f = \arctan(\mathrm{imag}(\mathrm{selfcorr})/\mathrm{real}(\mathrm{selfcorr}))/(2 \cdot \pi \cdot (t_2 - t_1)/1000)\,; \mathrm{and}$$

the first frequency offset meets a first constraint:

$$-\pi \leq 2 \cdot \pi \cdot \Delta f \cdot (t_2 - t_1)/1000 \leq \pi, \mathrm{wherein}$$

$\Delta f$ is the first frequency offset, imag(selfcorr) is an imaginary part of the autocorrelation function, and real(selfcorr) is a real part of the autocorrelation function.

6. A frequency synchronization method, comprising:
sending a first signal corresponding to a low frequency band, wherein the first signal is used to determine a first frequency offset corresponding to a high frequency band.

7. The method according to claim 6, wherein after sending the first signal corresponding to the low frequency band, the method further comprises:

receiving a third signal;
determining whether the third signal is frequency-synchronized in the high frequency band; and
if the third signal is not frequency-synchronized in the high frequency band, sending a fifth signal corresponding to the low frequency band.

8. The method according to claim 7, wherein determining whether the third signal is frequency-synchronized in the high frequency band specifically comprises:

obtaining a second frequency offset corresponding to the high frequency band based on the third signal; and
determining whether the second frequency offset is within a preset range, wherein if the second frequency offset is not within the preset range, the third signal is not frequency-synchronized in the high frequency band.

9. The method according to claim 7, wherein determining whether the third signal is frequency-synchronized in the high frequency band specifically comprises:
determining whether the third signal is correct, wherein if the third signal is incorrect, the third signal is not frequency-synchronized in the high frequency band.

10. The method according to claim 9, wherein determining whether the third signal is correct specifically comprises:
determining whether the third signal is correctly decoded, wherein if the third signal is not correctly decoded, the third signal is not frequency-synchronized in the high frequency band.

11. The method according to any one of claims 7 to 10, wherein after determining whether the third signal is frequency-synchronized in the high frequency band, the method further comprises:
if the third signal is frequency-synchronized in the high frequency band, sending a fourth signal corresponding to the high frequency band.

12. The method according to any one of claims 6 to 11, wherein after sending the first signal corresponding to the low frequency band, the method further comprises:
receiving a second signal corresponding to the high frequency band.

13. A communication apparatus, comprising:

an interface module, configured to receive a first signal corresponding to a low frequency band; and
a processing module, configured to obtain a first frequency offset corresponding to a high frequency band based on the first signal, wherein the first frequency offset is used for frequency synchronization in the high frequency band.

14. The communication apparatus according to claim 13, wherein
the interface module is further configured to send a second signal corresponding to the high frequency band.

15. The communication apparatus according to claim 14, wherein
the interface module is specifically configured to: send a third signal, wherein the third signal is used to determine whether frequency synchronization is performed in the high frequency band; and after receiving a fourth signal corresponding to the high frequency band, send the second signal corresponding to the high frequency band.

16. The communication apparatus according to any one of claims 13 to 15, wherein
the first frequency offset is specifically used for voltage or capacitance adjustment of a crystal oscillator.

17. The communication apparatus according to any one of claims 13 to 16, wherein

the processing module is specifically configured to: obtain a time-domain signal that is in the first signal and that repeats at least two signal periods, wherein the at least two signal periods comprise a first signal period and a second signal period; and calculate the first frequency offset corresponding to the high frequency band based on an autocorrelation function of the time-domain signal, wherein
the autocorrelation function meets a first formula:

$$\text{selfcorr} = \int_0^T s^*(t + t_1) \cdot s(t + t_2)$$

, wherein
selfcorr is the autocorrelation function, t is a time variable of the time-domain signal, $t_1$ is an initial time of the first signal period, $t_2$ is an initial time of the second signal period, T is duration of the signal period, s(t) represents a time-domain signal function that changes with the time variable t, and s*(t) is a conjugate function of s(t);
the first frequency offset meets a second formula:

$$\Delta f = \arctan(\text{imag}(\text{selfcorr})/\text{real}(\text{selfcorr}))/(2 \cdot \pi \cdot (t_2 - t_1)/1000)$$

; and
the first frequency offset meets a first constraint:

$$-\pi \leq 2 \cdot \pi \cdot \Delta f \cdot (t_2 - t_1)/1000 \leq \pi,$$

wherein
$\Delta f$ is the first frequency offset, imag(selfcorr) is an imaginary part of the autocorrelation function, and real(selfcorr) is a real part of the autocorrelation function.

18. A communication apparatus, comprising:
an interface module, configured to send a first signal corresponding to a low frequency band, wherein the first signal is used to determine a first frequency offset corresponding to a high frequency band.

19. The communication apparatus according to claim 18, further comprising a processing module, wherein

the interface module is further configured to receive a third signal;
the processing module is configured to determine whether the third signal is frequency-synchronized in the high frequency band; and
if the third signal is not frequency-synchronized in the high frequency band, the interface module is further configured to send a fifth signal corresponding to the low frequency band.

20. The communication apparatus according to claim 19, wherein
the processing module is specifically configured to: obtain a second frequency offset corresponding to the high frequency band based on the third signal; and determine whether the second frequency offset is within a preset range, wherein if the second frequency offset is not within the preset range, the third signal is not frequency-synchronized in the high frequency band.

21. The communication apparatus according to claim 19, wherein
the processing module is specifically configured to determine whether the third signal is correct, wherein if the third signal is incorrect, the third signal is not frequency-synchronized in the high frequency band.

22. The communication apparatus according to claim 21, wherein
the processing module is specifically configured to determine whether the third signal is correctly decoded.

23. The communication apparatus according to any one of claims 19 to 22, wherein
if the third signal is frequency-synchronized in the high frequency band, the interface module is further configured to send a fourth signal corresponding to the high frequency band.

24. The communication apparatus according to any one of claims 18 to 23, wherein
the interface module is further configured to receive a second signal corresponding to the high frequency band.

**25.** A communication apparatus, comprising a memory and a processor, wherein
the memory stores code, the processor is configured to execute the code, and when the code is executed, the terminal device performs the method according to any one of claims 1 to 12.

**26.** A computer-readable storage medium, wherein the computer-readable storage medium stores a computer program, and when the computer program is executed by a communication apparatus, the communication apparatus is enabled to perform the method according to any one of claims 1 to 12.

**27.** A computer program product, comprising a program, wherein when the program is executed by a processor, the method according to any one of claims 1 to 12 is implemented.

Low frequency band ⟋— 102

| Low-frequency-band communication chip | | Low-frequency-band transceiver apparatus ⟋— 104 |

Crystal oscillator ⟋— 105

High frequency band ⟋— 101

| High-frequency-band communication chip | | High-frequency-band transceiver apparatus ⟋— 103 |

FIG. 1

201

202

Second device

FIG. 2

FIG. 3

FIG. 4

EP 4 618 642 A1

First device

Second device

501: Send a first signal corresponding to a low frequency band

502: Obtain a first frequency offset corresponding to a high frequency band based on the first signal

503: Send a second signal corresponding to the high frequency band

FIG. 5

Crystal model 601

R          L          C0

C1

External load and parasitic capacitance of the crystal 602

CL

ΔC

FIG. 6

First device

Second device

703: Send a third signal

704: Determine whether the third signal is frequency-synchronized in a high frequency band

705: If the third signal is not frequency-synchronized in the high frequency band, send a fifth signal corresponding to a low frequency band

706: If the third signal is frequency-synchronized in the high frequency band, send a fourth signal corresponding to the high frequency band

707: Send a second signal corresponding to the high frequency band

FIG. 7

Communication apparatus 800

801

802

Interface module

Processing module

FIG. 8

Communication apparatus 900

901

902

Interface module

Processing module

FIG. 9

Antenna

Radio frequency circuit

1010

Memory

Processor

1020

Input/Output apparatus

FIG. 10

1101

Communication apparatus

Processor

Memory

Transceiver

1102

1103

FIG. 11

## INTERNATIONAL SEARCH REPORT

| International application No. |
|---|
| **PCT/CN2023/133845** |

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 低频, 高频, 共存, 频偏, 偏移, 频率, 同步, 时域, 自相关, high+, low+, frequency, 4G, 5G, LTE, NR, offset, synchronization

**C. DOCUMENTS CONSIDERED TO BE RELEVANT**

| Category* | Citation of document, with indication, where appropriate, of the relevant passages | Relevant to claim No. |
|---|---|---|
| X | CN 109792699 A (QUALCOMM INC.) 21 May 2019 (2019-05-21) description, paragraphs [0036]-[0132], and figures 1-16 | 1-4, 6-16, 18-27 |
| A | CN 109219130 A (HUAWEI TECHNOLOGIES CO., LTD.) 15 January 2019 (2019-01-15) entire document | 1-27 |
| A | CN 114629758 A (GUANGDONG OPPO MOBILE COMMUNICATIONS CO., LTD.) 14 June 2022 (2022-06-14) entire document | 1-27 |
| A | CN 111194525 A (QUALCOMM INC.) 22 May 2020 (2020-05-22) entire document | 1-27 |
| A | US 2020059874 A1 (SAMSUNG ELECTRONICS CO., LTD.) 20 February 2020 (2020-02-20) entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2024** | **15 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/133845**

| Patent document cited in search report | | | Publication date (day/month/year) | Patent family member(s) | | | Publication date (day/month/year) |
|---|---|---|---|---|---|---|---|
| CN | 109792699 | A | 21 May 2019 | US | 2020112933 | A1 | 09 April 2020 |
| | | | | US | 11202267 | B2 | 14 December 2021 |
| | | | | US | 2018084513 | A1 | 22 March 2018 |
| | | | | US | 10536914 | B2 | 14 January 2020 |
| | | | | EP | 3516909 | A1 | 31 July 2019 |
| | | | | WO | 2018057189 | A1 | 29 March 2018 |
| CN | 109219130 | A | 15 January 2019 | US | 2020137703 | A1 | 30 April 2020 |
| | | | | WO | 2019001583 | A1 | 03 January 2019 |
| | | | | EP | 3634049 | A1 | 08 April 2020 |
| | | | | EP | 3634049 | A4 | 17 June 2020 |
| CN | 114629758 | A | 14 June 2022 | None | | | |
| CN | 111194525 | A | 22 May 2020 | EP | 3695532 | A1 | 19 August 2020 |
| | | | | EP | 3695532 | B1 | 01 June 2022 |
| | | | | US | 2019110254 | A1 | 11 April 2019 |
| | | | | US | 11064439 | B2 | 13 July 2021 |
| | | | | WO | 2019074854 | A1 | 18 April 2019 |
| | | | | US | 2021337479 | A1 | 28 October 2021 |
| | | | | US | 11864115 | B2 | 02 January 2024 |
| US | 2020059874 | A1 | 20 February 2020 | KR | 20180081431 | A | 16 July 2018 |
| | | | | KR | 102399978 | B1 | 19 May 2022 |
| | | | | US | 11076371 | B2 | 27 July 2021 |
| | | | | EP | 3553978 | A1 | 16 October 2019 |
| | | | | EP | 3553978 | A4 | 15 January 2020 |
| | | | | EP | 3553978 | B1 | 28 September 2022 |
| | | | | ES | 2929426 | T3 | 29 November 2022 |
| | | | | US | 2021352603 | A1 | 11 November 2021 |
| | | | | US | 11683768 | B2 | 20 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211716284